# FASCICULE DE BREVET EUROPEEN

(11) **EP 2 273 763 B1**
(45) Date de publication et mention de la délivrance du brevet: **07.11.2018**
(21) Numéro de dépôt: 10165857.3
(22) Date de dépôt: 14.06.2010
(51) Int. Cl.: H04W 76/19

(54) **Système et procédé de détection d'une perte de liaison entre une passerelle de communication et un service applicatif**
System und Verfahren zur Detektion von Verbindungsverlust zwischen einem Gateway und einem Anwendungsdienst
System and method for detecting connection loss between a gateway and an application service

(30) Priorité: 26.06.2009 FR 0954366
(43) Date de publication de la demande: 12.01.2011
(73) Titulaire: Orange, 75015 Paris (FR)
(72) Inventeur: Bouvet, Bertrand, 22700 Perros-Guirec (FR); Gustin, Emmanuel, 22700 Saint Quay Perros (FR)
(74) Mandataire: Cougard, Jean-Marie

(56) Documents cités:
- WO-A1-2009/039894
- "TISPAN NGN Release 2; H.248 Non-Call Related Procedures and Management System Interaction; Draft ETSI TR 183 025" ETSI STANDARDS, LIS, SOPHIA ANTIPOLIS CEDEX, FRANCE, vol. TISPAN, no. V2.1.0, 1 novembre 2007 (2007-11-01), XP014040865 ISSN: 0000-0001
- "3rd Generation Partnership Project;Technical Specification Group Core Network and Terminals;Study on IMS Restoration Procedures(Release 8)" 3GPP DRAFT; 23820-130_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Cape Town; 20080512, 12 mai 2008 (2008-05-12), XP050040664
- SASA HERCEG ET AL: "Challenges in Implementing a SIP-Based Application Server", TELECOMMUNICATIONS, 2007. CONTEL 2007. 9TH INTERNATIONAL CONFERENCE ON, IEEE, PI, 1 June 2007 (2007-06-01), pages 333-338, XP031113743, ISBN: 978-953-184-110-8

## Description

### Arrière-plan de l'invention

L'invention concerne la détection d'une perte de liaison entre une passerelle d'interconnexion (également appelée passerelle de communication) et un service applicatif dans un réseau de communication.

Le réseau informatique mondial Internet connaît depuis plus d'une décennie une croissance très importante, aussi bien au niveau du nombre d'utilisateurs que de la variété des services applicatifs supportés.

On entend ici par service applicatif tout type de service qui peut être fourni par un serveur d'applications à un utilisateur dans un réseau de communication de type Internet.

La communication par voix sur IP, appelée communément la technologie VoIP (« *Voice over IP* » en anglais), est un exemple de service applicatif sur Internet qui a connu des développements significatifs ces dernières années. Cette technique permet de communiquer par voix via Internet ou tout autre réseau de communication acceptant le protocole TCP/IP (Transmission Control Protocol/Internet Protocol).

Les services téléphoniques, en particulier, migrent de plus en plus vers des solutions VoIP, à l'instar de la technologie ToIP (pour *Telephony over Internet Protocol*).

Le service de la vidéo à la demande (VoD pour « Vidéo on Demand » en anglais) est un autre exemple de service applicatif supporté par Internet et qui connaît un succès croissant.

L'accès à ces services applicatifs et de manière générale, à un réseau de type Internet, nécessite un équipement informatique bien particulier.

Une passerelle d'interconnexion (ou de communication) telle que la LiveBox™, par exemple, permet à l'utilisateur d'un terminal de se connecter à un réseau de communication de type Internet. Une passerelle correspond à un équipement d'interconnexion entre deux réseaux hétérogènes, typiquement entre un réseau local et un réseau de type Internet. On notera que le réseau local comprend au moins un terminal.

Ainsi, grâce à une passerelle, une partie ou l'ensemble d'un réseau local peut communiquer avec des serveurs d'applications distants hébergeant des services applicatifs donnés. La passerelle joue ainsi le rôle de routeur et très souvent, de pare-feu et/ou de proxy.

Par ailleurs, la liaison entre une passerelle d'interconnexion et un service applicatif est directement dépendante du bon fonctionnement de la passerelle d'interconnexion utilisée.

On entendra dans la suite de la demande par le terme « liaison », toute forme de liaison de communication permettant à une passerelle d'une part, et à un service applicatif d'autre part, d'échanger des informations. Cette liaison pourra faire intervenir différents protocoles et canaux de communication.

En particulier, la capacité de la passerelle à accéder à un service applicatif dans un réseau de communication sera fonction de la présence ou non de cette liaison entre ladite passerelle et le service applicatif.

En pratique, différents événements déclencheurs peuvent engendrer une perte de liaison entre une passerelle d'interconnexion et un service applicatif.

On comprendra, par exemple, qu'une passerelle d'interconnexion sera dans l'incapacité de communiquer avec un service applicatif, lorsque l'alimentation électrique de celle-ci est coupée.

Ainsi, si la passerelle est confrontée à une panne du réseau d'alimentation en énergie électrique, toute communication avec l'opérateur du service applicatif en question deviendra impossible. De telles coupures de courant ne sont pas rares et peuvent résulter, notamment, d'opérations de maintenance dans le réseau d'alimentation en énergie électrique ou de délestage lors d'une période de grand froid par exemple.

Par ailleurs, la fiabilité d'une passerelle d'interconnexion n'est pas toujours optimale, des pannes diverses pouvant survenir de manière inopinée. Certains types de pannes, comme par exemple le « blocage » ou *« freeze* » total ou partiel du système d'exploitation de la passerelle, peuvent empêcher une communication normale avec un service applicatif. Une réinitialisation de la passerelle (c'est-à-dire une procédure d'amorçage ou « reboot » en anglais) peut être nécessaire pour pallier ce type de panne.

La disponibilité d'un service applicatif peut également dépendre de certains facteurs sur lesquels un utilisateur n'aura aucun contrôle. Un réaménagement du réseau de l'opérateur télécom, par exemple, pourra causer la perte momentanée du service en question.

Par ailleurs, dans certains cas, une passerelle d'interconnexion peut être amenée à se déconnecter volontairement du réseau de l'opérateur, de sorte que toute communication avec le service applicatif désiré devient impossible.

Le plus souvent, une perte de liaison entre une passerelle et un service applicatif n'est pas prévisible pour l'utilisateur.

En tout état de cause, ces pertes entraînent une gêne majeure pour l'utilisateur dans son utilisation des services applicatifs supportés par les réseaux de type Internet.

La perte, par exemple, de services de télécommunications (ou « services télécoms ») pourra s'avérer problématique pour l'utilisateur qui sera dans l'incapacité d'appeler les services d'urgences en cas de besoin.

On notera, qu'aujourd'hui, la majorité des passerelles proposées sur le marché disposent de voyants lumineux indiquant l'état de service (session PPPoE Internet établie, fonctionnalité VoIP opérationnelle etc.). Ces voyants sont cependant limités en termes de fiabilité et de quantité d'informations pouvant être fournies à l'utilisateur. Par ailleurs, il n'est pas toujours possible pour un utilisateur de vérifier visuellement l'état des ces voyants lumineux.

Il existe donc aujourd'hui un besoin pour détecter de manière simple et efficace une perte de liaison entre une passerelle d'interconnexion et au moins un service applicatif, et pour effectuer des actions particulières lorsque de telles pertes sont détectées.

Il existe en particulier un besoin pour alerter un utilisateur lorsqu'une perte de liaison entre une passerelle d'interconnexion et un service applicatif est détectée.

A noter que l'étude technique TR 183 025 (2.1.0) intitulée « TISPAN NGN Release 2 ; H.248 Non-Call Related Procedures and Management System Interaction » établie par l'ETSI (European Telecommunications Standard Institute) décrit des procédures propres au protocole H.248. Ce document traite en particulier des procédures à mette en oeuvre par un MGC (Media Gateway Controller) ou un MG (Media Gateway), notamment dans le cas où un MG rencontre une panne.

L'étude technique 3GPP TR 23.820 (v1.3.0) intitulée « 3rd Generation Partnership Project; Technical Specification Group Core Network and Terminais ; Study on IMS Restoration Procedures (Release 8) » établie par le groupe 3GPP décrit quant à elle des procédures à mettre en oeuvre lorsqu'un élément d'un réseau IMS rencontre une panne.

Le document WO 2009/039894 A1 divulgue un procédé pour remédier à une défaillance d'un serveur P-CSCF au sein d'un réseau IMS. Pour ce faire, une passerelle détecte des signaux provenant du serveur P-CSCF et fournit une indication si les signaux détectés deviennent inacceptables, par exemple en raison d'une interruption des signaux. La passerelle signale alors à des équipements d'utilisateur l'indisponibilité du serveur P-CSCF.

L'article "Challenges in Implementing a SIP-Based Application Server", Sasa HERCEG ET AL, publié le 01-06-2007 dans le cadre de la conférence IEEE CONTEL 2007, décrit différents enjeux liés à l'implémentation d'un serveur d'application SIP, et plus particulièrement ceux liés aux cas de perte de connexion entre l'utilisateur et un SIP Proxy, ainsi qu'un mécanisme générale de "keep-alive" toujours dans une perspective utilisateur final.

### Objet et résumé de l'invention

L'invention est définie par les revendications indépendantes 1, 7, 13, 14 et 15 qui définissent respectivement un serveur d'application, une méthode correspondante pour un serveur d'application, un programme d'ordinateur, un support d'enregistrement et un système. D'autres modes de réalisation sont définis dans les revendications dépendantes.

Les modes de réalisations et les exemples dans la description suivante qui ne sont pas couverts par les revendications ci-après ne sont pas considérés comme faisant part de la présente invention. La présente invention a donc pour but principal de répondre aux besoins identifiés ci-dessus.

En particulier, l'objet de la présente invention est de proposer un serveur d'applications apte à détecter une perte de liaison entre une passerelle d'interconnexion et au moins un service applicatif accessible par la passerelle via un réseau IMS, la passerelle d'interconnexion connectant un réseau local audit réseau IMS, le serveur d'applications comprenant :
- des moyens pour détecter une perte de liaison entre la passerelle et ledit au moins un service applicatif suite à l'absence de réception, dans un délai prédéfini, d'une requête d'enregistrement en provenance de la passerelle ou suite à la réception d'un message de suspension d'enregistrement en provenance de la passerelle ; et
- des moyens pour déclencher au moins une première action prédéterminée en réponse à la détection de la perte d'accès.

Le serveur d'applications selon l'invention est donc avantageux en ce qu'il permet le déclenchement d'au moins une action prédéterminée lorsqu'une perte de liaison entre une passerelle d'interconnexion et un service applicatif est détectée.

La première action prédéterminée peut être choisie parmi au moins l'une des actions suivantes : notification à un utilisateur de la perte de liaison détectée, envoi d'un ordre de redémarrage de la passerelle, envoi d'un message de test vers ladite passerelle, et envoi d'un ordre de mise à jour d'un programme de ladite passerelle.

Une notification à un utilisateur peut prendre des formes diverses et utiliser différents types de canaux de communication pour atteindre l'utilisateur.

De manière avantageuse, un utilisateur de la passerelle pourra être averti de la perte de liaison entre ladite passerelle et le au moins un service applicatif.

Il est également possible de forcer la passerelle à se réinitialiser ou à réinstaller un programme lorsqu'une perte de liaison est détectée et ce, afin de rétablir cette dernière. Un message peut en outre être envoyé à la passerelle afin de tester, par exemple, au moins une de ses fonctionnalités.

Selon un autre mode de réalisation, une première action prédéterminée comprend l'envoi d'un message de test à la passerelle et le serveur d'applications comprend en outre :
- des moyens pour déterminer, à partir d'une réponse de la passerelle au message de test, la cause de la perte de liaison, la cause étant au moins l'une parmi les causes suivantes : suspension de l'alimentation électrique de la passerelle, problème logiciel de la passerelle et interruption du réseau IMS ; et
- des moyens pour déclencher au moins une seconde action prédéterminée suite à la détermination de la cause de la perte de liaison.

Le serveur d'applications selon ce mode de réalisation permet d'envoyer un message de test à une passerelle lorsqu'une perte de liaison avec un service applicatif a été détectée, et de déterminer la cause de ladite perte de liaison.

Il est ainsi possible, à partir de la réponse de la passerelle audit message de test, de déclencher une seconde action prédéterminée adaptée à la cause de la perte de liaison.

De manière préférentielle, la seconde action prédéterminée pourra comprendre la notification à un utilisateur de la cause de la perte de liaison entre la passerelle et le service applicatif.

Selon un autre mode de réalisation, le serveur d'applications comprend en outre :
- des moyens pour détecter le rétablissement de la liaison entre la passerelle et le service applicatif suite à la réception d'un message de réenregistrement provenant de ladite passerelle; et
- des moyens pour déclencher au moins une troisième action prédéterminée en réponse à la détection du rétablissement de ladite liaison.

Ainsi, suite à la rupture d'une liaison entre une passerelle d'interconnexion et un service applicatif, il est possible de détecter le rétablissement de la liaison et de déclencher au moins une troisième action prédéterminée en conséquence.

La troisième action prédéterminée peut comprendre la notification à un utilisateur du rétablissement de la liaison entre la passerelle et le service applicatif.

L'invention vise aussi un procédé de détection d'une perte de liaison entre une passerelle d'interconnexion et au moins un service applicatif accessible par la passerelle via un réseau IMS, la passerelle d'interconnexion connectant un réseau local au réseau IMS, ledit procédé comprenant en outre :
- la détection d'une perte de liaison entre la passerelle et le service applicatif suite à l'absence de réception, dans un délai prédéfini, d'une requête d'enregistrement en provenance de la passerelle ou suite à la réception d'un message de suspension d'enregistrement en provenance de ladite passerelle ; et
- le déclenchement d'au moins une première action prédéterminée en réponse à la détection de ladite perte de liaison.

La première action prédéterminée peut être choisie parmi au moins l'une des actions suivantes : notification à un utilisateur de la perte de liaison détectée, envoi d'un ordre de réinitialisation de la passerelle, envoi d'un message de test vers ladite passerelle, et envoi d'un ordre de mise à jour d'un programme de ladite passerelle.

Selon un mode de réalisation de l'invention, la première action comprend l'envoi d'un message de test à la passerelle, le procédé comprenant en outre :
- la détermination, à partir d'une réponse de la passerelle au message de test, de la cause de la perte de liaison, la cause étant au moins l'une parmi les causes suivantes : suspension de l'alimentation électrique de la passerelle, problème logiciel de la passerelle et interruption du réseau IMS ; et
- le déclenchement d'au moins une seconde action prédéterminée suite à la détermination de la cause de ladite perte de liaison.

La seconde action prédéterminée peut comprendre la notification à un utilisateur de la cause de la perte de liaison détectée.

Selon un autre mode de réalisation, le procédé comprend en outre :
- la détection du rétablissement de la liaison entre la passerelle et le service applicatif suite à la réception d'un message de réenregistrement provenant de la passerelle; et
- le déclenchement d'au moins une troisième action prédéterminée en réponse à la détection du rétablissement de ladite liaison.

La troisième action prédéterminée peut comprendre la notification à un utilisateur du rétablissement de la liaison entre la passerelle et le service applicatif.

On notera que les différents modes du procédé selon l'invention présentent les mêmes avantages que ceux énumérés en référence aux modes de réalisation respectifs du serveur d'applications selon l'invention.

Dans un mode particulier de réalisation, les différentes étapes du procédé de détection selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur d'applications ou plus généralement dans un ordinateur, ce programme comportant des instructions adaptées à la mise en oeuvre des étapes d'un procédé de détection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un système comprenant une passerelle d'interconnexion et un serveur d'applications selon l'invention, ledit serveur d'applications étant apte à détecter une rupture de liaison entre ladite passerelle et un service applicatif.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un exemple de réseau IMS connu assurant la liaison entre une passerelle d'interconnexion et un serveur d'applications ;
- la figure 2 représente l'exemple de réseau IMS de la figure 1 comprenant en outre un serveur d'applications conformément à l'invention ;
- la figure 3 représente un exemple d'architecture du serveur d'applications selon l'invention ;
- la figure 4 représente les principales étapes d'un procédé de détection d'une perte de liaison entre une passerelle d'interconnexion et un service applicatif selon l'invention ;
- la figure 5 représente les principales étapes d'une variante du procédé de détection selon l'invention ;
- la figure 6 représente les principales étapes d'un autre mode de réalisation du procédé de détection selon l'invention.

### Description détaillée d'un mode de réalisation

Dans la suite de la demande, on s'intéressera à une passerelle d'interconnexion effectuant l'interconnexion entre un réseau local et un réseau de type IMS (« *IP Multimedia Subsystem* » en anglais).

L'architecture standardisée IMS permet la fourniture de services multimédias fixes et mobiles selon le protocole SIP. Ce type de réseau utilise en particulier la technologie VoIP.

On notera cependant que l'invention ne se limite pas aux environnements de type IMS et s'applique en fait à tous les types de réseaux de communication pouvant supporter un service applicatif.

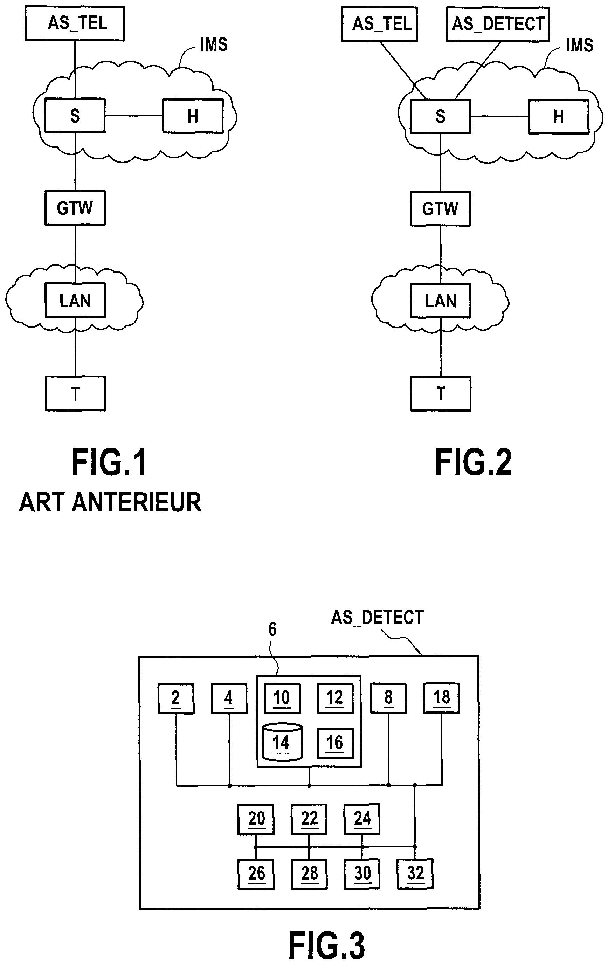

La **figure 1** représente un exemple connu de réseau de communication de type IMS (WAN) assurant la liaison entre une passerelle d'interconnexion (GTW) et un serveur d'applications (AS_TEL).

Dans l'exemple envisagé, le serveur d'applications (AS_TEL) héberge un service applicatif de télécommunications (appelé service TELECOM par la suite), tel qu'un service ToIP par exemple.

La passerelle (GTW) effectue l'interconnexion entre un réseau local (LAN) réunissant au moins un terminal (T) et le réseau de communication IMS.

Un serveur S-CSCF (S) (pour « *Serving-Call Session Control Function* ») est positionné en coupure de flux entre ladite passerelle (GTW) et le serveur d'applications (AS) de sorte que toute communication entre la passerelle (GTW) et le serveur d'applications (AS_TEL) se fait par l'intermédiaire du serveur S-CSCF (S).

Ce serveur S-CSCF (S) a notamment la charge de gérer l'enregistrement SIP de la passerelle d'interconnexion (GTW) auprès du réseau IMS (la procédure d'enregistrement sera décrite plus en détail ultérieurement). Le serveur S-CSCF (S) effectue également le routage des messages SIP échangés entre la passerelle (GTW) et le serveur d'applications (AS_TEL) et est capable de déclencher auprès dudit serveur les services téléphoniques TELECOM auxquels chaque utilisateur a souscrit.

Dans une variante, le serveur S-CSCF (S) peut être composé d'une pluralité de serveurs S-CSCF.

Une base de données HSS (H) (pour « *Home Suscriber Server*») est également reliée au serveur S-CSCF (S). Celle-ci contient des informations propres à chaque client sous la forme de profils d'utilisateur. Ces profils d'utilisateur contiennent, par exemple, les identifiants publics et privés associés au compte du client, et définissent les différents services applicatifs auxquels chaque utilisateur a souscrit. A ce titre, la base de données HSS (H) permet l'authentification des utilisateurs désirant accéder à un service hébergé par le serveur d'applications (AS_TEL).

De manière connue, pour pouvoir communiquer avec le service applicatif (TELECOM) via un réseau de type IMS, la passerelle d'interconnexion (GTW) doit s'enregistrer périodiquement auprès dudit réseau. Pour accéder à un service de type ToIP par exemple, la passerelle d'interconnexion (GTW) s'enregistre à intervalle régulier via le protocole ToIP utilisé (H323, SIP, MGCP,...).

Plus spécifiquement, la procédure d'enregistrement de la passerelle (GTW) consiste à fournir au réseau IMS, et plus particulièrement au serveur S-CSCF (S), des informations d'enregistrement (ou informations de contexte).

Ces informations comprendront, par exemple, l'adresse IP de joignabilité de la passerelle (GTW) et le numéro de téléphone de la ligne ToIP en question.

Les informations de contexte sont ainsi envoyées régulièrement depuis la passerelle d'interconnexion (GTW) vers le serveur S-CSCF (S) sous la forme d'une requête d'enregistrement, appelée communément requête REGISTER.

Si la requête d'enregistrement est valide, le serveur S-CSCF (S) renvoie un message de validation de l'enregistrement (communément appelé message « 200 OK ») à la passerelle (GTW). Ce message de validation d'enregistrement contient un champ EXPIRES qui correspond au délai maximal de temps dans lequel la passerelle (GTW) doit se réenregistrer pour conserver la liaison avec le service applicatif (TELECOM).

Dans le cadre des services applicatifs TELECOM, par exemple, la valeur du champ EXPIRES est généralement fixée à 3600 secondes.

Cela signifie que la passerelle (GTW) doit se réenregistrer dans un délai maximum de 3600 secondes auprès du réseau IMS afin de conserver le service téléphonique désiré.

La valeur attribuée au champ EXPIRES dépendra de l'opérateur et du type de service applicatif proposé.

En pratique, si le délai EXPIRES est supérieur ou égal à 1200 secondes, la passerelle se réenregistrera généralement dans un délai égal à [EXPIRES - 600 secondes]. Si, en revanche, le délai EXPIRES est inférieur à 1200 secondes, la passerelle (GTW) se réenregistrera généralement dans un délai égal à [EXPIRES/2].

On notera également que lorsque la passerelle (GTW) s'enregistre pour la première fois, le serveur S-CSCF (S) télécharge le profil de l'utilisateur contenu dans la base de données HSS (H). Le profil est ainsi enregistré en local dans le serveur S-CSCF (S).

A partir du profil de l'utilisateur, le serveur S-CSCF (S) vérifie l'authenticité du demandeur et obtient la liste du/des services à déclencher, en particulier le service (TELECOM) rendu par le service d'applications (AS_TEL).

Par la suite, à chaque fois que le serveur S-CSCF (S) reçoit de la passerelle (GTW) un message SIP à destination d'un service applicatif donné, le serveur S-CSCF (S) détermine, à partir du profil précédemment enregistré, si l'utilisateur a souscrit au service demandé. Si l'utilisateur est effectivement autorisé à accéder au service demandé, le serveur S-CSCF (S) achemine le message SIP auprès du serveur d'applications approprié de manière à déclencher le service désiré.

Si, par exemple, la passerelle (GTW) tente d'accéder au service téléphonique TELECOM fourni par le serveur d'applications (AS_TEL), le serveur S-CSCF (S) n'autorisera cet accès que si le profil de l'utilisateur téléchargé depuis la base de données HSS (H) le permet.

Par ailleurs, dès qu'une suspension de l'enregistrement de la passerelle (GTW) survient (suite à une coupure d'alimentation par exemple), cette suspension est accompagnée d'une perte de liaison entre la passerelle (GTW) et tout service applicatif fourni par le serveur d'applications (AS_TEL). En conséquence, la passerelle ne peut plus accéder au service applicatif (TELECOM) fourni par le serveur d'applications (AS_TEL).

Le serveur S-CSCF (S) notifie alors la base de données HSS (H) de ladite suspension d'enregistrement de la passerelle.

Les éléments constituant un réseau de type IMS ainsi que leurs principes de fonctionnement sont connus de l'homme du métier et ne seront pas détaillés davantage ici.

On notera par ailleurs que certains constituants faisant généralement partie d'un réseau IMS ont été volontairement omis car ils n'apportent rien à la compréhension de la présente invention. En particulier, l'homme du métier comprendra que généralement, plusieurs serveurs sont situés en coupure de flux entre le serveur S-CSCF (S) et la passerelle (GTW), comme par exemple au moins un proxy P-CSCF (pour « Proxy-Call Session Control Function ») et au moins un serveur I-CSCF (pour « Interrogating Call Session Control Function »).

La **figure 2** représente le réseau IMS illustré en figure 1, le réseau comprenant en outre un serveur d'applications (AS_DETECT) conformément à l'invention.

Plus spécifiquement, la présente invention propose de mettre en oeuvre un serveur d'applications (AS_DETECT) hébergeant un service de détection d'une perte de liaison entre une passerelle d'interconnexion (GTW) et un service applicatif (TELECOM) dans un réseau de communication.

Dans la suite de la demande, ce service de détection sera désigné par le terme service applicatif DETECT.

A noter que, dans l'exemple envisagé ici, le service applicatif DETECT est hébergé par un serveur d'applications (AS_DETECT) distinct du serveur d'applications (AS_TEL). On notera cependant que le serveur d'applications (AS_DETECT) n'est pas nécessairement une entité physique séparée du serveur d'applications (AS_TEL). Dans une variante, une application logicielle est intégrée dans un serveur comprenant le serveur d'applications (AS_ TEL), cette application permettant d'exécuter le service DETECT selon l'invention.

On comprendra également que les services applicatifs de type télécom proposés par le serveur (AS_TEL) sont choisis à titre d'exemple et que la présente invention s'applique à tout type de service applicatif.

Par ailleurs, de manière préférentielle, le service DETECT ne sera activable que pour les utilisateurs ayant souscrit à ce service.

Le serveur S-CSCF (S) peut, par exemple, être configuré pour déterminer, à partir du profil d'un utilisateur contenu dans la base de données HSS (H), si celui-ci est autorisé à utiliser le service DETECT. Le serveur S-CSCF (S) n'établira alors une liaison entre la passerelle (GTW) de l'utilisateur et le serveur d'applications (AS_DETECT) que si l'utilisateur en question a souscrit au service DETECT.

La **figure 3** représente un exemple d'architecture du serveur d'applications (AS_DETECT) selon l'invention.

Dans l'exemple envisagé ici, le serveur d'applications (AS_DETECT) présente l'architecture matérielle d'un ordinateur. Plus précisément, il comporte un processeur (2), une mémoire vive de type RAM (4), une mémoire morte de type ROM (6) et une mémoire non volatile (8).

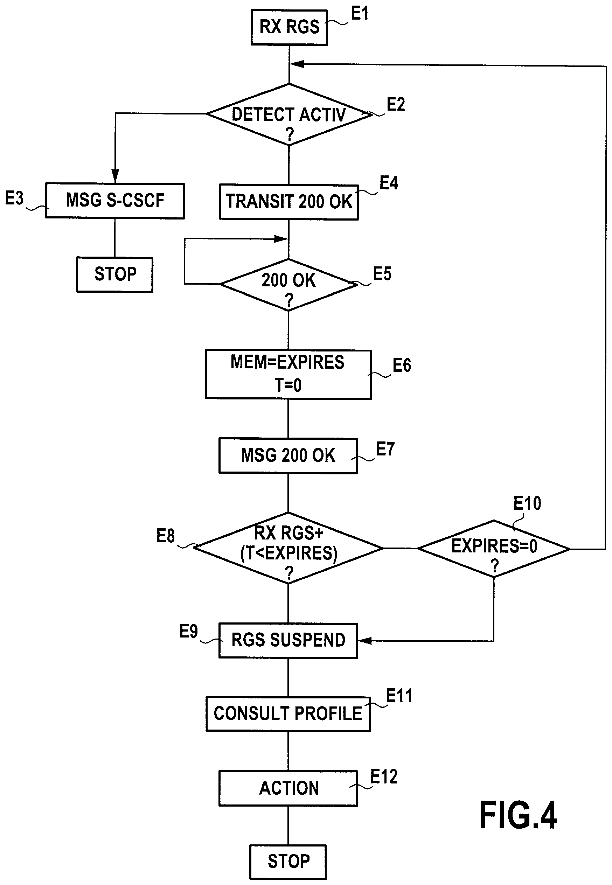

La mémoire morte (6) constitue un support d'enregistrement conforme à l'invention, lisible par le serveur d'application (AS_DETECT), et sur lequel est enregistré un programme d'ordinateur (10) conforme à l'invention, comportant des instructions pour l'exécution des étapes d'un procédé de détection d'une perte de liaison selon l'invention. Les principales étapes de ce procédé sont représentées, dans un mode particulier de réalisation de l'invention, sur la **figure 4** décrite ultérieurement.

Le programme d'ordinateur selon l'invention peut, par exemple, s'appuyer sur une pile protocolaire VoIP SIP/H323/MGCP.

En outre, la mémoire ROM (6) comprend ici une couche logicielle TCP-UDP/IP (12), une base de données (14) et des informations de trace (16).

La base de données (14) comprend, par exemple, l'état d'activation du service DETECT fourni par le serveur d'applications (AS_DETECT), cet état indiquant si le service DETECT est activé ou désactivé pour un utilisateur donné à un instant donné.

La base de données (14) peut également contenir des informations concernant l'état d'enregistrement de la passerelle (GTW) auprès du réseau IMS. L'état d'enregistrement de la passerelle (GTW) peut, par exemple, être fixé à « VRAI » lorsque la passerelle est enregistrée auprès du réseau IMS et à « FAUX » dans le cas contraire.

Les informations de trace (16) donnent des indications sur l'historique des pertes de liaison ayant été précédemment détectées entre la passerelle (GTW) et un service applicatif donné. L'utilisateur peut ainsi accéder à des informations concernant d'anciennes pertes de liaison, notamment celles qui ne lui avaient pas été notifiées.

Les informations de trace (16) peuvent également comprendre des indications sur des actions prédéterminées qui ont été précédemment déclenchées par le serveur d'applications (AS_DETECT) ainsi que l'historique des rétablissements de liaison précédemment détectés (les actions prédéterminées ainsi que la détection de rétablissement de liaison selon l'invention seront décrits plus en détail ultérieurement).

De plus, le serveur d'applications (AS_DETECT) comprend une interface réseau (de type « Fast Ethernet », par exemple) afin de communiquer avec le réseau IMS.

Le serveur d'applications (AS_DETECT) comprend également un serveur web (18) permettant à un utilisateur d'accéder aux informations contenues dans son profil d'utilisateur de la base de données (14), ainsi qu'à modifier ce profil si nécessaire.

On notera que le serveur web (18) est placé ici au sein même du serveur d'applications (AS_DETECT). Il est cependant envisageable que ce serveur soit situé à l'extérieur du serveur d'applications (AS_DETECT).

Le serveur d'applications (AS_DETECT) comprend en outre des modules d'envoi qui permettent à celui-ci d'effectuer au moins une action prédéterminée suite à un événement déclencheur détecté par le serveur d'applications (AS_DETECT).

On notera que les évènements déclencheurs correspondent aux différents types d'événements qui peuvent être détectés par le serveur d'applications (AS_DETECT).

Dans l'exemple envisagé ici, le module d'envoi SMS/MMS (20), le module d'envoi Fax (22), le module d'envoi d'emails (24), le module d'envoi de messages IM (26), le module de génération de messages vocaux (téléphoniques...) (28) et le module de notification Web (30) sont autant de moyens compris dans le serveur d'applications (AS_DETECT) qui permettent de notifier un utilisateur de l'occurrence d'un évènement déclencheur.

Enfin, le module d'envoi d'ordre (32) est apte à envoyer des messages d'ordre vers des entités distantes suite à la détection d'un événement déclencheur (ces messages seront décrits plus en détail ultérieurement).

On notera que les modules (20) à (32) sont ici compris dans le serveur d'applications (AS_DETECT). On peut cependant envisager le cas où au moins un de ces modules est mis en oeuvre à l'extérieur du serveur d'applications (AS_DETECT), ce dernier étant capable de communiquer avec au moins un module pour déclencher à distance une action prédéterminée.

Nous allons à présent décrire, en référence à la **figure 4****,** les étapes successives effectuées par le serveur d'applications (AS_DETECT) pour mettre en oeuvre un mode de réalisation du procédé selon l'invention.

On supposera ici que l'utilisateur de la passerelle (GTW) a souscrit au service de détection DETECT hébergé par le serveur d'applications (AS_TEL), et que par conséquent, il est autorisé à utiliser ce service.

Lorsque la passerelle d'interconnexion (GTW) est mise en marche, elle procède à son premier enregistrement auprès du réseau IMS. Lorsque le serveur S-CSCF (S) reçoit la requête d'enregistrement initiale, il transfert celle-ci vers le serveur d'application (AS_DETECT).

On notera que les étapes d'authentification de l'utilisateur ont été ici volontairement omises car elles n'apportent aucune information supplémentaire concernant la présente invention.

Le serveur d'applications (AS_DETECT) reçoit ainsi une requête d'enregistrement REGISTER initiale provenant de la passerelle (GTW) (étape E1).

Le serveur d'applications (AS_DETECT) détermine alors si le service DETECT est activé ou désactivé pour l'utilisateur considéré (étape E2).

Pour ce faire, le serveur d'applications (AS_DETECT) consulte le profil de l'utilisateur contenu dans la base de données (14).

Si l'utilisateur n'a pas activé le service DETECT, le serveur d'applications (AS_DETECT) retransmet vers le serveur S-CSCF (S) la requête d'enregistrement initiale telle que reçue sans aucune modification. Le serveur d'applications (AS_DETECT) se comporte ensuite en proxy SIP : il renvoie chacune des requêtes d'enregistrement subséquentes vers le serveur S-CSCF (S) et ce, sans y apporter aucune modification (étape E3). On notera que, dans l'exemple envisagé ici, le profil de l'utilisateur téléchargé par le serveur S-CSCF (S) force ce dernier à envoyer chaque requête d'enregistrement de la passerelle (GTW) vers le serveur d'applications (AS_DETECT).

Si, en revanche, le service DETECT est activé, le serveur d'applications (AS_DETECT) fixe l'état d'enregistrement de la passerelle (GTW) à VRAI dans la base de données (14). En outre, le serveur d'applications (AS_DETECT) envoie l'ordre au serveur S-CSCF (S) de faire transiter, par le serveur d'applications (AS_DETECT), le message de validation d'enregistrement (200 OK) à venir (étape E4). Pour ce faire, le serveur d'applications (AS_DETECT) renvoie, vers le serveur S-CSCF (S), la requête d'enregistrement REGISTER après y avoir inséré un entête SIP Via (conforme à la norme RFC 3261) et l'adresse IP/FQDN du serveur d'applications (AS_DETECT).

Le serveur d'applications (AS_DETECT) détermine ensuite s'il reçoit le message de validation d'enregistrement (200 OK) provenant du serveur S-CSCF (S) (étape E5).

Lorsque le message de validation d'enregistrement (200 OK) est reçu, le serveur d'applications (AS_DETECT) en extrait la valeur du délai EXPIRES (étape E6).

La valeur du délai EXPIRES ainsi extraite est enregistrée en local dans la mémoire RAM (4) du serveur d'applications (AS_DETECT) (étape E6).

De cette manière, le serveur d'applications (AS_DETECT) a connaissance du délai EXPIRES dans lequel la passerelle (GTW) doit se réenregistrer afin de conserver la liaison avec le service applicatif (TELECOM).

Dans le même temps, le serveur d'applications (AS_DETECT) déclenche une horloge interne. On notera cependant que le déclenchement d'une horloge externe au serveur d'applications (AS_DETECT) est aussi envisageable.

Une fois le délai EXPIRES mémorisé et le déclenchement de l'horloge effectué, le serveur d'applications (AS_DETECT) renvoie le message de validation d'enregistrement (200 OK) vers le serveur S-CSCF (S) (étape E7). Ce message est ensuite envoyé vers la passerelle (GTW).

Le déclenchement de l'horloge permet au serveur d'applications (AS_DETECT) de déterminer si la passerelle (GTW) renvoie une nouvelle requête d'enregistrement dans le délai EXPIRES comme indiqué dans le précédent message de validation d'enregistrement 200 OK (étape E7).

Le serveur d'applications (AS_DETECT) détermine alors s'il reçoit une nouvelle requête d'enregistrement en provenance de la passerelle (GTW) dans le délai EXPIRES mémorisé dans la mémoire RAM (4) (étape E8).

Si aucune requête d'enregistrement n'est reçue dans le délai EXPIRES imparti, cela signifie que la passerelle (GTW) n'est plus enregistrée auprès du réseau IMS : la passerelle (GTW) a suspendu son enregistrement auprès du réseau IMS.

Cette suspension de l'enregistrement de la passerelle (GTW) signifie en outre que la liaison entre la passerelle (GTW) et le service applicatif (TELECOM) fourni par le serveur d'applications (AS_TEL) est perdue.

En conséquence, le serveur d'applications (AS_DETECT) fixe l'état d'enregistrement de la passerelle (GTW) dans la base de données (14) à FAUX (étape E9).

Dans l'exemple envisagé, la suspension de l'enregistrement de la passerelle (GTW), suite à l'absence de requête d'enregistrement dans le délai EXPIRES imparti, est considérée comme une suspension involontaire de la part de la passerelle (GTW).

Une suspension d'enregistrement involontaire peut résulter, par exemple, d'une coupure d'alimentation électrique de la passerelle (GTW), d'un problème logiciel de ladite passerelle ou encore d'une interruption du réseau de télécommunications de l'opérateur.

En entend ici par interruption du réseau de télécommunications, toute interruption causant la perte de liaison entre la passerelle (GTW) et un service applicatif. Une telle interruption peut résulter, par exemple, d'une panne involontaire dans le réseau de télécommunications de l'opérateur ou encore, d'un réaménagement de celui-ci.

Si par ailleurs le serveur d'applications (AS_DETECT) reçoit une requête d'enregistrement provenant de la passerelle (GTW) dans le délai EXPIRES prédéfini, le serveur d'applications (AS_DETECT) détermine la valeur EXPIRES contenue dans la requête d'enregistrement (étape E10).

Dans l'exemple considéré, si cette valeur est fixée à zéro, cela signifie que la passerelle d'interconnexion (GTW) suspend volontairement son enregistrement auprès du réseau IMS. Dans ce cas, la requête d'enregistrement de la passerelle (GTW) correspond en fait à un message de suspension d'enregistrement.

On notera que plusieurs raisons peuvent être à l'origine d'une suspension volontaire d'enregistrement de la part de la passerelle (GTW).

Cela peut s'expliquer, par exemple, par le fait que la passerelle (GTW) a besoin de mettre à jour un logiciel ou une configuration donnée.

Une suspension volontaire peut également survenir lorsque la passerelle (GTW) ne parvient pas à renouveler son bail DHCP dans le réseau IMS (renouvellement du bail d'adresse IP à une périodicité définie par une option du serveur DHCP, par exemple, toutes les 12 heures). Dans ce cas particulier, la passerelle (GTW) suspend volontairement son enregistrement auprès du réseau IMS, le temps de se voir attribuer une nouvelle adresse IP et donc de se réenregistrer dans le réseau IMS. A partir de ce nouvel enregistrement, le serveur S-CSCF (S) obtient la correspondance entre l'adresse IP et l'identité publique (numéro de téléphone de l'utilisateur) d'une part, et la nouvelle adresse IP d'autre part.

Lorsqu'un message de suspension d'enregistrement est reçu par le serveur d'applications (AS_DETECT), celui-ci fixe l'état d'enregistrement de la passerelle (GTW) dans la base de données (14) à FAUX (étape E9).

Si en revanche, la valeur du délai EXPIRES n'est pas égale à zéro, cela signifie que la passerelle (GTW) renouvelle son enregistrement. Dans ce cas, le procédé retourne à l'étape (E2) de manière à surveiller le cycle d'enregistrement suivant.

Le procédé peut ainsi être appliqué de manière récurrente tant que le service DETECT n'est pas désactivé par l'utilisateur.

On notera qu'une valeur prédéfinie autre que zéro pourrait être choisie pour notifier au serveur d'applications (AS_DETECT) que la passerelle (GTW) suspend volontairement son enregistrement auprès du réseau IMS.

Une fois que l'état d'enregistrement de la passerelle (GTW) a été fixé à FAUX lors de l'étape (E9), le serveur d'applications (AS_DETECT) consulte le profil de l'utilisateur dans la base de données (14) et détermine, à partir de ce profil, les actions prédéterminées à réaliser en réponse à la perte de liaison détectée (étape E11).

Le serveur d'applications (AS_DETECT) procède ensuite au déclenchement des actions prédéfinies conformément aux informations contenues dans le profil d'utilisateur approprié dans la base de données (14) (étape E12).

Par exemple, le serveur d'applications (AS_DETECT) enregistre dans les informations de trace (16), chaque perte de liaison détectée en spécifiant éventuellement la cause de la perte, la date et heure et toutes autres informations qui pourraient être utiles à un utilisateur.

Ces actions prédéterminées pourront varier selon qu'il s'agit d'une perte de liaison volontaire (suite à la réception d'un message de suspension d'enregistrement dans le délai EXPIRES) ou involontaire (suite à l'absence de réception d'une requête d'enregistrement dans le délai EXPIRES).

Les actions prédéfinies peuvent également comprendre l'envoi, à au moins un utilisateur, d'une notification de détection de perte de liaison de communication entre la passerelle (GTW) et le serveur d'applications (AS_TEL).

Une telle notification sera envoyée préférentiellement à l'utilisateur du service TELECOM et/ou au responsable de maintenance de la passerelle.

Cette notification pourra être déclenchée, par exemple, par un des modules d'envoi (20) à (30) du serveur d'applications (AS_DETECT).

De plus, cette notification peut indiquer si la perte de liaison est due à une suspension volontaire ou involontaire de la part de la passerelle (GTW).

Les actions prédéfinies peuvent également comprendre l'envoi d'un message d'ordre, via le module d'envoi d'ordre (32), vers une entité extérieure au serveur d'applications (AS_DETECT). Ce message d'ordre vise à déclencher à distance des actions prédéfinies au niveau de la passerelle (GTW). Un tel message d'ordre pourra, par exemple, déclencher la réinitialisation de la passerelle (GTW), la réinstallation ou modification d'un logiciel dans ladite passerelle, ou encore la mise à jour de la configuration de ladite passerelle.

Ce message d'ordre pourra être envoyé directement à la passerelle (GTW) via le serveur S-CSCF (S). De manière alternative, le serveur d'applications (AS_DETECT) envoie ce message d'ordre vers un serveur distant qui se chargera de commander la passerelle (GTW) à distance.

Dans l'exemple envisagé, chaque action prédéfinie déclenchée par le serveur d'applications (AS_DETECT) est enregistrée dans les informations de trace (16).

Par ailleurs, dans une variante du procédé illustré en figure 4, il sera possible de personnaliser les actions prédéterminées déclenchées par le serveur d'applications (AS_DETECT) selon la cause de la perte de liaison entre la passerelle (GTW) et le service applicatif (TELECOM).

On peut envisager, par exemple, de ne pas déclencher d'action prédéterminée lorsque la perte de liaison est accompagnée d'une suspension volontaire de l'enregistrement de la passerelle (GTW) auprès du réseau IMS.

Dans ce cas, le serveur d'applications (AS_DETECT) peut se contenter de fixer l'état d'enregistrement de la passerelle (GTW) à FAUX dans la base de données (14).

Dans un mode de réalisation particulier de l'invention, le serveur d'applications (AS_DETECT) est en outre capable, suite à la détection d'une perte de liaison entre la passerelle (GTW) et le service applicatif (TELECOM), de récolter des informations supplémentaires depuis ladite passerelle.

Lorsque, par exemple, le serveur d'applications (AS_DETECT) détecte une suspension d'enregistrement involontaire de la passerelle (GTW), il envoie à ladite passerelle un message de test.

Ce message de test correspond, par exemple, à un message SIP OPTIONS.

Ce message permet de déclencher un test de la passerelle (GTW) afin, par exemple, de déterminer les différents protocoles supportés par ladite passerelle.

A partir de la réponse de la passerelle audit message de test, le serveur d'applications (AS_DETECT) est capable de déterminer plus précisément les raisons de la perte de liaison.

Si, par exemple, une perte de liaison involontaire a été détectée et que le serveur d'applications (AS_DETECT) reçoit une réponse (même erronée) provenant de la passerelle (GTW) en réponse audit message de test, cela signifie que l'alimentation électrique de la passerelle est toujours opérationnelle.

En outre, le serveur d'applications (AS_DETECT) pourra, à partir du code retourné par la passerelle (GTW) suite à l'envoi du message de test, déterminer si la perte de liaison est due à un problème logiciel de la passerelle (GTW) ou à une interruption du réseau de l'opérateur.

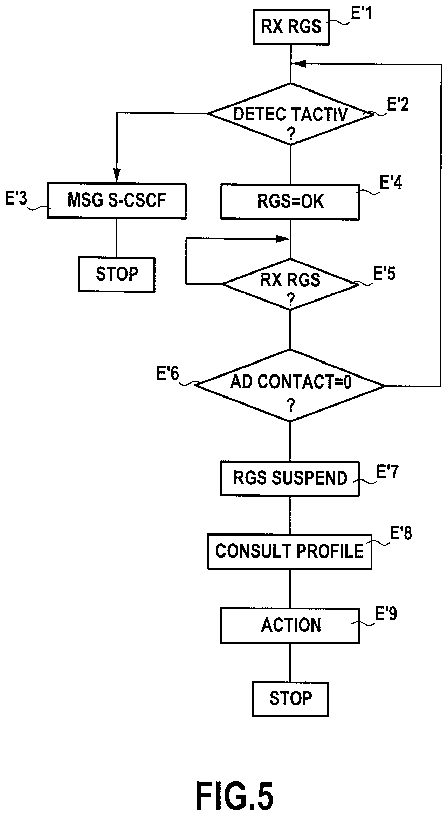

Nous allons à présent décrire, en référence à la **figure 5****,** une autre variante du procédé correspondant à la figure 4.

Selon la variante envisagée ici, les étapes E'1, E'2 et E'3 sont identiques aux étapes E1, E2 et E3 de la figure 4, respectivement.

En revanche, lorsqu'une première requête d'enregistrement est reçue par le serveur d'applications (AS_DETECT) et que le service DETECT est activé, le serveur d'applications (AS_DETECT) ne force pas le serveur S-CSCF (S) à faire transiter le message de validation d'enregistrement 200 OK par ledit serveur d'applications (AS_DETECT) (comme dans l'étape E4 de la figure 4).

Le serveur d'applications (AS_DETECT) se limite ici à fixer à VRAI l'état d'enregistrement de la passerelle (GTW) dans la base de données (14) (étape E'4).

Le serveur d'applications (AS_DETECT) détermine ensuite s'il reçoit, via le serveur S-CSCF, une requête d'enregistrement de la passerelle (GTW) (E'5).

Lorsqu'une telle requête est reçue, le serveur d'applications (AS_DETECT) détermine le contenu du champ correspondant à l'adresse de contact (étape E'6).

Si ce champ est vide, cela signifie que la passerelle (GTW) n'est plus enregistrée auprès du réseau IMS et que la liaison avec le service applicatif TELECOM est perdue.

Dans ce cas, le serveur d'applications (AS_DETECT) procède aux étapes E'7 à E'9 correspondant respectivement aux étapes E9, E11 et E12 du procédé illustré en figure 4.

On notera ici que, par soucis de clarté, l'étape (E10) du procédé de la figure 3 n'a pas été incorporée dans cette variante. On comprendra bien entendu qu'une telle incorporation est possible.

Par ailleurs, si le champ de l'adresse de contact n'est pas vide, cela signifie que la passerelle (GTW) renouvelle son enregistrement auprès du réseau et que la liaison avec le service applicatif (TELECOM) est maintenue. Dans ce cas, le serveur d'applications (AS_DETECT) retourne à l'étape E'2 décrite ci-dessus.

Cette variante est avantageuse en ce que le serveur d'applications (AS_DETECT) n'a pas besoin de mémoriser le délai EXPIRES et de déclencher une horloge comme dans le procédé de la figure 4.

En fait, le serveur d'applications (AS_DETECT) ne détecte pas une perte involontaire de liaison à partir de l'absence d'envoi d'une requête d'enregistrement. C'est ici le serveur S-CSCF (S) qui envoie une requête d'enregistrement modifiée (avec, par exemple, le champ « adresse de contact » vide) au serveur d'applications (AS_DETECT) de manière à lui notifier la suspension involontaire d'enregistrement de la passerelle (GTW).

Une telle requête d'enregistrement modifiée constitue alors un message de suspension d'enregistrement.

La présente invention vise également un serveur d'applications (AS_DETECT) capable, suite à la détection d'une perte de liaison entre une passerelle (GTW) et un service applicatif (TELECOM), de détecter le rétablissement de ladite liaison.

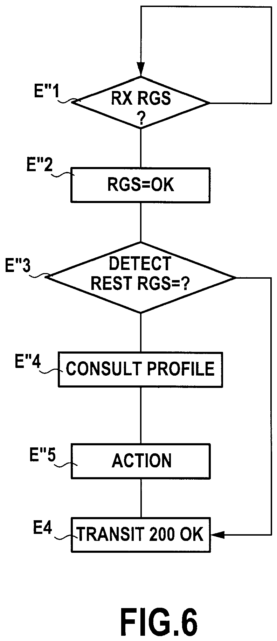

Nous allons à présent décrire, en référence à la **figure 6****,** un mode particulier du procédé selon l'invention, selon lequel un rétablissement d'une telle liaison peut être détecté.

On supposera ici qu'une perte de liaison entre la passerelle (GTW) et le service applicatif (TELECOM) a été précédemment détectée par le serveur d'applications (AS_DETECT) et que, par conséquent, l'état d'enregistrement de la passerelle (GTW) dans la base de données (14) est fixé à FAUX.

Dans l'exemple envisagé, le serveur d'applications (AS_DETECT) vérifie si une requête d'enregistrement en provenance de la passerelle (GTW) a été transmise par le serveur S-CSCF (S) (étape E"1).

Lorsqu'une telle requête est reçue par le serveur d'applications (AS_DETECT), ce dernier fixe l'état d'enregistrement de la passerelle (GTW) dans la base de données (14) à VRAI (étape E"2).

Le serveur d'applications (AS_DETECT) vérifie ensuite dans le profil de l'utilisateur dans la base de données (14) si le service complémentaire permettant la détection de rétablissement de la liaison est activé (étape E"3).

Si ce service complémentaire n'est pas activé, le serveur d'applications (AS_DETECT) peut, par exemple, retourner à l'étape (E4) décrite en référence à la figure 4.

Si en revanche, le service de détection de rétablissement de liaison est activé, le serveur d'applications (AS_DETECT) consulte le profil de l'utilisateur dans la base de données (14) afin de déterminer les actions prédéterminées à réaliser (étape E"4).

Le serveur d'applications (AS_DETECT) procède ensuite aux actions prédéfinies conformément aux informations contenues dans le profil de l'utilisateur (étape E"5).

Ces actions peuvent, par exemple, être du même type que celles décrites en référence à l'étape E12 du procédé illustré en figure 4.

Le serveur d'applications (AS_DETECT) peut, par exemple, enregistrer dans les informations de trace (16) des indications portant sur le rétablissement de liaison détectée (heure, date etc.).

De manière préférentielle, le serveur d'applications (AS_DETECT) notifie un utilisateur, via un des modules d'envoi (20) à (30), du rétablissement de la liaison entre la passerelle (GTW) et le service applicatif (TELECOM).

De manière préférentielle, le serveur d'applications (AS_DETECT) reprend ensuite à l'étape (E4) décrite précédemment.

Par ailleurs, on notera que lorsque le serveur d'applications (AS_DETECT) détecte une suspension d'enregistrement de la passerelle (GTW), certaines des actions prédéterminées décrites précédemment pourront être déclenchées de manière différée. De manière alternative, ces actions seront uniquement effectuées si un renouvellement de l'enregistrement de la passerelle (GTW) n'est pas détecté dans un délai prédéfini.

Par exemple, lorsque le serveur d'applications (AS_DETECT) détecte une suspension d'enregistrement de la passerelle (GTW), celui-ci peut déclencher une horloge. Une notification de perte de liaison ne sera alors envoyée que si aucune nouvelle requête d'enregistrement n'est reçue par le serveur d'applications (AS_DETECT) dans un délai de 8 heures.

De cette manière, il est possible d'éviter le déclenchement superflu d'actions prédéterminées lorsque la suspension de l'enregistrement ne se produit que pendant une période réduite.

Pour les même raisons, il est possible d'envisager la variante suivante : lorsque le serveur d'applications (AS_DETECT) détecte à l'étape (E10) que le délai EXPIRES de la requête d'enregistrement reçue est égal à zéro, une horloge est déclenchée. Le serveur d'applications ne procèdera à l'étape (E9) que si aucune nouvelle requête d'enregistrement valide provenant de la passerelle (GTW) n'est reçue dans un délai prédéfini.

Par ailleurs, un utilisateur pourra visualiser et personnaliser les différentes variables du service DETECT en accédant, via le serveur web (18), à son profil d'utilisateur contenu dans la base de données (14).

En particulier, l'utilisateur pourra vérifier et personnaliser l'état d'activation du service DETECT.

L'utilisateur pourra également vérifier et personnaliser de manière individuelle les actions prédéterminées pour chaque type d'événement déclencheur (perte de liaison involontaire, rétablissement de liaison...) détecté par le serveur d'applications (AS_DETECT).

Un utilisateur pourra, par exemple, activer le service DETECT de manière à ce que lui soient notifiées uniquement les pertes de liaison involontaires.

Dans une variante, l'utilisateur pourra personnaliser son profil d'utilisateur afin que toutes les pertes de liaison détectées lui soient notifiées.

L'utilisateur pourra aussi personnaliser son profil afin que les rétablissements de liaison entre la passerelle (GTW) et le service applicatif (TELECOM) lui soient notifiés.

Le mode de notification (SMS, Fax, email ...) peut également dépendre des circonstances. Par exemple, la notification des pertes de liaison peut être effectuée via des messages SMS et la notification des rétablissements de liaison par email.

Un utilisateur pourra également accéder, via le serveur web (18), aux informations de trace enregistrées dans la mémoire RAM (4) (et si besoin les supprimer).

L'invention trouve une application particulière dans les systèmes d'alarme à usage domestique ou professionnel.

En effet, de nombreux systèmes d'alarme actuels emploient des centrales d'alarme distantes pour détecter et empêcher d'éventuels intrusions, incendies ou fuites de gaz, ou encore, pour contacter des services médicaux en cas de problèmes de santé (notamment pour les personnes âgées).

Ces systèmes d'alarme sont généralement reliés à un réseau de télécommunication afin de communiquer avec les centrales de surveillance. Dans le passé, ces systèmes utilisaient préférentiellement le réseau téléphonique commuté (RTC). Cependant, les réseaux de télécommunication évoluent maintenant de plus en plus vers des technologies IP, solutions moins fiables et disponibles que les circuits de type RTC/RNIS (Réseau Numérique à Intégration de Services).

Une application avantageuse de la présente invention consiste donc à permettre la détection de pertes de liaison entre une passerelle d'interconnexion et un tel service de surveillance.

De manière avantageuse, l'invention permet à un utilisateur d'être notifié lorsqu'une telle perte de liaison survient. Ainsi, l'utilisateur saura à quel moment le service de surveillance auquel il a souscrit n'est plus opérationnel, et pourra, le cas échéant, prendre les mesures nécessaires pour pallier le problème.

L'invention trouve également une application avantageuse dans la supervision des réseaux de télécommunications VoIP IMS par l'opérateur lui-même. Par exemple, on peut envisager le déclenchement d'alarmes lorsqu'un nombre significatif de suspensions d'enregistrement se produit (sur une zone géographique par exemple).

## Revendications

1. Serveur d'applications (AS_DETECT) apte à détecter une perte de liaison entre une passerelle d'interconnexion (GTW) et au moins un service applicatif accessible par ladite passerelle via un serveur S-CSCF (S) d'un réseau IMS, la passerelle d'interconnexion connectant un réseau local (LAN) au réseau IMS, le serveur d'applications comprenant :
- des moyens pour recevoir, en provenance du serveur S-CSCF, un message de validation d'enregistrement (200 OK) indiquant l'enregistrement de la passerelle d'interconnexion (GTW) auprès du réseau IMS ;
- des moyens pour déterminer, à partir du message d'enregistrement de validation reçu, un délai prédéfini (EXPIRES) dans lequel la passerelle d'interconnexion (GTW) doit renouveler son enregistrement auprès du réseau IMS ;
- des moyens de détection (2) pour déterminer si une requête d'enregistrement, auprès du réseau IMS, de la passerelle d'interconnexion (GTW) est reçue en provenance du serveur S-CSCF dans le délai prédéfini et pour détecter une perte de liaison entre la passerelle et ledit au moins un service applicatif si aucune dite requête d'enregistrement n'est reçue en provenance du serveur S-CSCF dans le délai prédéfini (EXPIRES) ou si un message de suspension d'enregistrement, auprès du réseau IMS, de la passerelle d'interconnexion est reçu en provenance dudit serveur S-CSCF dans le délai prédéfini, ladite perte de liaison signifiant que la passerelle d'interconnexion est dans l'incapacité d'accéder au service applicatif; et
- des moyens (2, 20...32) pour déclencher, en réponse à la détection de ladite perte de liaison, au moins une première action prédéterminée.

2. Serveur d'applications selon la revendication 1, dans lequel les moyens pour déclencher ladite au moins une première action prédéterminée sont configurés pour déclencher au moins l'une des actions suivantes en tant que première action prédéterminée : notification à un utilisateur de la perte de liaison détectée, envoi d'un ordre de réinitialisation de ladite passerelle (GTW), envoi d'un message de test vers ladite passerelle, et envoi d'un ordre de mise à jour d'un programme de ladite passerelle.

3. Serveur d'applications selon la revendication 1 ou 2, dans lequel ladite au moins une première action prédéterminée comprend l'envoi d'un message de test à la passerelle (GTW), le serveur d'applications (AS_DETECT) comprenant en outre :
- des moyens (2) pour déterminer, à partir d'une réponse de la passerelle audit message de test, la cause de ladite perte de liaison, la cause étant au moins l'une parmi les causes suivantes : suspension de l'alimentation électrique de ladite passerelle, problème logiciel de ladite passerelle et interruption du réseau IMS ; et
- des moyens (2, 20...30) pour déclencher au moins une seconde action prédéterminée suite à la détermination de la cause de ladite perte de liaison.

4. Serveur d'applications selon la revendication 3, dans lequel ladite au moins une seconde action prédéterminée comprend la notification à un utilisateur de la cause de ladite perte de liaison entre la passerelle (GTW) et ledit au moins un service applicatif.

5. Serveur d'applications selon l'une des revendications 1 à 4, le serveur d'applications comprenant en outre :
- des moyens (2) pour détecter le rétablissement de la liaison entre la passerelle (GTW) et ledit au moins un service applicatif suite à la réception d'une requête de réenregistrement provenant de ladite passerelle; et
- des moyens (2, 20...30) pour déclencher au moins une troisième action prédéterminée en réponse à la détection du rétablissement de ladite liaison.

6. Serveur d'applications selon la revendication 5, dans lequel ladite au moins une troisième action prédéterminée comprend la notification à un utilisateur du rétablissement de ladite liaison entre la passerelle et ledit au moins un service applicatif.

7. Procédé de détection, mise en oeuvre par un serveur d'applications (AS_DETECT), pour détecter une perte de liaison entre une passerelle d'interconnexion (GTW) et au moins un service applicatif accessible par ladite passerelle via un serveur S-CSCF (S) d'un réseau IMS, la passerelle d'interconnexion connectant un réseau local (LAN) au réseau IMS, le procédé comprenant :
- réception, en provenance du serveur S-CSCF, d'un message de validation d'enregistrement (200 OK) indiquant l'enregistrement de la passerelle d'interconnexion (GTW) auprès du réseau IMS ;
- détermination, à partir du message d'enregistrement de validation reçu, d'un délai prédéfini (EXPIRES) dans lequel la passerelle d'interconnexion (GTW) doit renouveler son enregistrement auprès du réseau IMS ;
- détermination de si une requête d'enregistrement, auprès du réseau IMS, de la passerelle d'interconnexion (GTW) est reçue en provenance du serveur S-CSCF dans le délai prédéfini et détection d'une perte de liaison entre la passerelle et ledit au moins un service applicatif si aucune dite requête d'enregistrement n'est reçue en provenance du serveur S-CSCF dans le délai prédéfini (EXPIRES) ou si un message de suspension d'enregistrement, auprès du réseau IMS, de la passerelle d'interconnexion est reçu en provenance du serveur S-CSCF dans le délai prédéfini, ladite perte de liaison signifiant que la passerelle d'interconnexion est dans l'incapacité d'accéder au service applicatif; et
- déclenchement d'au moins une première action prédéterminée en réponse à la détection de ladite perte de liaison.

8. Procédé de détection selon la revendication 7, dans lequel ladite au moins une première action prédéterminée est choisie parmi au moins l'une des actions suivantes : notification à un utilisateur de la perte de liaison détectée, envoi d'un ordre de réinitialisation de ladite passerelle (GTW), envoi d'un message de test vers ladite passerelle, et envoi d'un ordre de mise à jour d'un programme de ladite passerelle.

9. Procédé de détection selon la revendication 7 ou 8, dans lequel ladite au moins une première action comprend l'envoi d'un message de test à la passerelle, le procédé comprenant en outre :
- la détermination, à partir d'une réponse de la passerelle audit message de test, de la cause de ladite perte de liaison, la cause étant au moins l'une parmi les causes suivantes : suspension de l'alimentation électrique de ladite passerelle, problème logiciel de ladite passerelle et interruption du réseau IMS ; et
- le déclenchement d'au moins une seconde action prédéterminée suite à la détermination de la cause de ladite perte de liaison.

10. Procédé de détection selon la revendication 9, dans lequel ladite au moins une seconde action prédéterminée comprend la notification à un utilisateur de la cause de ladite perte de liaison détectée.

11. Procédé de détection selon l'une des revendications 7 à 10, le procédé comprenant en outre :
- la détection du rétablissement de la liaison entre la passerelle (GTW) et ledit au moins un service applicatif suite à la réception d'un requête de réenregistrement provenant de ladite passerelle; et
- le déclenchement d'au moins une troisième action prédéterminée en réponse à la détection du rétablissement de ladite liaison.

12. Procédé de détection selon la revendication 11, dans lequel ladite au moins une troisième action prédéterminée comprend la notification à un utilisateur du rétablissement de la liaison entre la passerelle et ledit au moins un service applicatif.

13. Programme d'ordinateur (10) comportant des instructions pour l'exécution des étapes du procédé de détection selon l'une quelconque des revendications 7 à 12 lorsque ledit programme est exécuté par un ordinateur.

14. Support d'enregistrement (6) lisible par un ordinateur sur lequel est enregistré un programme d'ordinateur (10) comprenant des instructions pour l'exécution des étapes du procédé de détection selon l'une quelconque des revendications 7 à 12.

15. Système comprenant une passerelle d'interconnexion (GTW) et un serveur d'applications (AS_DETECT) selon l'une des revendications 1 à 6, ledit serveur d'applications étant apte à détecter une perte de liaison entre ladite passerelle et au moins un service applicatif.

## Patentansprüche

1. Anwendungsserver (AS_DETECT), der zum Detektieren eines Verbindungsverlustes zwischen einem Verbindungs-Gateway (GTW) und mindestens einem Anwendungsdienst, auf den das Gateway über einen S-CSCF-Server (S) eines IMS-Netzes zugreifen kann, in der Lage ist, wobei das Verbindungs-Gateway ein Lokalnetz (LAN) mit dem IMS-Netz verbindet, wobei der Anwendungsserver Folgendes umfasst:
- Mittel zum Empfangen, vom S-CSCF-Server, einer Registrierungsvalidierungsnachricht (200 OK), die die Registrierung des Verbindungs-Gateways (GTW) mit dem IMS-Netz angibt;
- Mittel zum Bestimmen, aus der empfangenen Validierungsregistrierungsnachricht, eines vordefinierten Zeitraums (EXPIRES), in dem das Verbindungs-Gateway (GTW) seine Registrierung mit dem IMS-Netz erneuern muss;
- Detektionsmittel (2) zum Bestimmen, ob eine Anforderung zur Registrierung des Verbindungs-Gateways (GTW) mit dem IMS-Netz vom S-CSCF-Server innerhalb des vorbestimmten Zeitraums empfangen wird, und zum Detektieren eines Verbindungsverlustes zwischen dem Gateway und dem mindestens einen Anwendungsdienst, falls keine Anforderung zur Registrierung vom S-CSCF-Server innerhalb des vordefinierten Zeitraums (EXPIRES) empfangen wird, oder ob eine Nachricht zum Suspendieren einer Registrierung des Verbindungs-Gateways mit dem IMS-Netz vom S-CSCF-Server innerhalb des vordefinierten Zeitraums empfangen wird, wobei der Verbindungsverlust bezeichnet, dass das Verbindungs-Gateway nicht in der Lage ist, auf den Anwendungsdienst zuzugreifen; und
- Mittel (2, 20 ... 32) zum Auslösen, als Reaktion auf die Detektion des Verbindungsverlustes, von mindestens einer ersten vorbestimmten Handlung.

2. Anwendungsserver nach Anspruch 1, wobei die Mittel zum Auslösen der mindestens einen ersten vorbestimmten Handlung zum Auslösen von mindestens einer der folgenden Handlungen als eine erste vorbestimmte Handlung ausgelegt sind: Benachrichtigung an einen Benutzer über den detektierten Verbindungsverlust, Senden einer Anordnung zum Zurücksetzen des Gateways (GTW), Senden einer Prüfnachricht zum Gateway und Senden einer Anordnung zum Aktualisieren eines Programms des Gateways.

3. Anwendungsserver nach Anspruch 1 oder 2, wobei die mindestens eine erste vorbestimmte Handlung ein Senden einer Prüfnachricht zum Gateway (GTW) umfasst, wobei der Anwendungsserver (AS_DETECT) ferner Folgendes umfasst:
- Mittel (2) zum Bestimmen, aus einer Antwort vom Gateway auf die Prüfnachrichten, der Ursache des Verbindungsverlustes, wobei die Ursache mindestens eine der folgenden Ursachen ist: Suspension der elektrischen Leistungsversorgung des Gateways, Softwareproblem des Gateways und Unterbrechung des IMS-Netzes; und
- Mittel (2, 20 ... 30) zum Auslösen von mindestens einer zweiten vorbestimmten Handlung im Anschluss an die Bestimmung der Ursache des Verbindungsverlustes.

4. Anwendungsserver nach Anspruch 3, wobei die mindestens eine zweite vorbestimmte Handlung die Benachrichtigung an einem Benutzer über die Ursache des Verbindungsverlustes zwischen dem Gateway (GTW) und dem mindestens einen Anwendungsdienst umfasst.

5. Anwendungsserver nach einem der Ansprüche 1 bis 4, wobei der Anwendungsserver ferner Folgendes umfasst:
- Mittel (2) zum Detektieren der Wiederherstellung der Verbindung zwischen dem Gateway (GTW) und dem mindestens einen Anwendungsdienst im Anschluss an den Empfang einer Neuregistrierungsanforderung vom Gateway; und
- Mittel (2, 20 ... 30) zum Auslösen von mindestens einer dritten vorbestimmten Handlung als Reaktion auf die Detektion der Wiederherstellung der Verbindung.

6. Anwendungsserver nach Anspruch 5, wobei die mindestens eine dritte vorbestimmte Handlung die Benachrichtigung an einem Benutzer über die Wiederherstellung der Verbindung zwischen dem Gateway und dem mindestens einen Anwendungsdienst umfasst.

7. Verfahren zur Detektion, das durch einen Anwendungsserver (AS_DETECT) zum Detektieren eines Verbindungsverlustes zwischen einem Verbindungs-Gateway (GTW) und mindestens einem Anwendungsdienst, auf den das Gateway über einen S-CSCF-Server (S) eines IMS-Netzes zugreifen kann, implementiert wird, wobei das Verbindungs-Gateway ein Lokalnetz (LAN) mit dem IMS-Netz verbindet, wobei das Verfahren Folgendes umfasst:
- Empfang, vom S-CSCF-Server, einer Registrierungsvalidierungsnachricht (200 OK), die die Registrierung des Verbindungs-Gateways (GTW) mit dem IMS-Netz angibt;
- Bestimmung, aus der empfangenen Validierungsregistrierungsnachricht, eines vordefinierten Zeitraums (EXPIRES), in dem das Verbindungs-Gateway (GTW) seine Registrierung mit dem IMS-Netz erneuern muss;
- Bestimmung, ob eine Anforderung zur Registrierung des Verbindungs-Gateways (GTW) mit dem IMS-Netz vom S-CSCF-Server innerhalb des vorbestimmten Zeitraums empfangen wird, und Detektion eines Verbindungsverlustes zwischen dem Gateway und dem mindestens einen Anwendungsdienst, falls keine Anforderung zur Registrierung vom S-CSCF-Server innerhalb des vordefinierten Zeitraums (EXPIRES) empfangen wird, oder ob eine Nachricht zum Suspendieren der Registrierung des Verbindungs-Gateways mit dem IMS-Netz vom S-CSCF-Server innerhalb des vordefinierten Zeitraums empfangen wird, wobei der Verbindungsverlust bezeichnet, dass das Verbindungs-Gateway nicht in der Lage ist, auf den Anwendungsdienst zuzugreifen; und
- Auslösen von mindestens einer ersten vorbestimmten Handlung als Reaktion auf die Detektion des Verbindungsverlustes.

8. Verfahren zur Detektion nach Anspruch 7, wobei die mindestens eine erste vorbestimmte Handlung aus mindestens einer der folgenden Handlungen ausgewählt wird: Benachrichtigung an einen Benutzer über den detektierten Verbindungsverlust, Senden einer Anordnung zum Zurücksetzen des Gateways (GTW), Senden einer Prüfnachricht zum Gateway und Senden einer Anordnung zum Aktualisieren eines Programms des Gateways.

9. Verfahren zur Detektion nach Anspruch 7 oder 8, wobei die mindestens eine erste Handlung ein Senden einer Prüfnachricht zum Gateway umfasst, wobei das Verfahren ferner Folgendes umfasst:
- die Bestimmung, aus einer Antwort vom Gateway auf die Prüfnachricht, der Ursache des Verbindungsverlustes, wobei die Ursache mindestens eine der folgenden Ursachen ist: Suspension der elektrischen Leistungsversorgung des Gateways, Softwareproblem des Gateways und Unterbrechung des IMS-Netzes; und
- das Auslösen von mindestens einer zweiten vorbestimmten Handlung im Anschluss an die Bestimmung der Ursache des Verbindungsverlustes.

10. Verfahren zur Detektion nach Anspruch 9, wobei die mindestens eine zweite vorbestimmte Handlung die Benachrichtigung an einen Benutzer über die Ursache des detektierten Verbindungsverlustes umfasst.

11. Verfahren zur Detektion nach einem der Ansprüche 7 bis 10, wobei das Verfahren ferner Folgendes umfasst:
- die Detektion der Wiederherstellung der Verbindung zwischen dem Gateway (GTW) und dem mindestens einen Anwendungsdienst im Anschluss an den Empfang einer Neuregistrierungsanforderung vom Gateway; und
- das Auslösen von mindestens einer dritten vorbestimmten Handlung als Reaktion auf die Detektion der Wiederherstellung der Verbindung.

12. Verfahren zur Detektion nach Anspruch 11, wobei die mindestens eine dritte vorbestimmte Handlung die Benachrichtigung an einen Benutzer über die Wiederherstellung der Verbindung zwischen dem Gateway und dem mindestens einen Anwendungsdienst umfasst.

13. Computerprogramm (10), das Anweisungen zum Ausführen der Schritte des Verfahrens zur Detektion nach einem der Ansprüche 7 bis 12 umfasst, wenn das Programm durch einen Computer ausgeführt wird.

14. Computerlesbares Aufzeichnungsmedium (6), auf dem ein Computerprogramm (10) aufgezeichnet ist, umfassend Anweisungen zur Ausführung der Schritte des Verfahrens zur Detektion nach einem der Ansprüche 7 bis 12.

15. System, umfassend ein Verbindungs-Gateway (GTW) und einen Anwendungsserver (AS_DETECT) nach einem der Ansprüche 1 bis 6, wobei der Anwendungsserver zum Detektieren eines Verbindungsverlustes zwischen dem Gateway und mindestens einem Anwendungsdienst in der Lage ist.

## Claims

1. Application server (AS_DETECT) capable of detecting a connection loss between an interconnection gateway (GTW) and at least one application service accessible by said gateway via an S-CSCF server (S) of an IMS network, the interconnection gateway connecting a local area network (LAN) to the IMS network, the application server comprising:
- means for receiving, from the S-CSCF server, a registration validation message (200 OK) indicating the registration of the interconnection gateway (GTW) with the IMS network;
- means for determining, from the validation registration message received, a predefined period (EXPIRES) within which the interconnection gateway (GTW) has to renew its registration with the IMS network;
- detection means (2) for determining whether a request for registration of the interconnection gateway (GTW), with the IMS network, is received from the S-CSCF server within the predetermined period and for detecting a connection loss between the gateway and said at least one application service if no said request for registration is received from the S-CSCF server within the predefined period (EXPIRES) or whether a message for suspending registration of the interconnection gateway, with the IMS network, is received from said S-CSCF server within the predefined period, said connection loss signifying that the interconnection gateway is unable to access the application service; and
- means (2, 20...32) for triggering, in response to the detection of said connection loss, at least one first predetermined action.

2. Application server according to Claim 1, in which the means for triggering said at least one first predetermined action are configured for triggering at least one of the following actions as a first predetermined action: notification to a user of the detected connection loss, sending an order to reset said gateway (GTW), sending a test message to said gateway, and sending an order to update a program of the said gateway.

3. Application server according to Claim 1 or 2, in which said at least one first predetermined action comprises sending a test message to the gateway (GTW), the application server (AS_DETECT) further comprising:
- means (2) for determining, from a response from the gateway to said test message, the cause of said connection loss, the cause being at least one of the following causes: suspension of the electrical power supply of said gateway, software problem of said gateway and interruption of the IMS network; and
- means (2, 20...30) for triggering at least one second predetermined action following the determination of the cause of said connection loss.

4. Application server according to Claim 3, in which said at least one second predetermined action comprises the notification to a user of the cause of said connection loss between the gateway (GTW) and said at least one application service.

5. Application server according to one of Claims 1 to 4, the application server further comprising:
- means (2) for detecting the restoration of the connection between the gateway (GTW) and said at least one application service following the reception of a re-registration request from said gateway; and
- means (2, 20...30) for triggering at least one third predetermined action in response to the detection of the restoration of said connection.

6. Application server according to Claim 5, in which said at least one third predetermined action comprises the notification to a user of the restoration of said connection between the gateway and said at least one application service.

7. Method of detection, implemented by an application server (AS_DETECT) for detecting a connection loss between an interconnection gateway (GTW) and at least one application service accessible by said gateway via an S-CSCF server (S) of an IMS network, the interconnection gateway connecting a local area network (LAN) to the IMS network, the method comprising:
- reception, from the S-CSCF server, of a registration validation message (200 OK) indicating the registration of the interconnection gateway (GTW) with the IMS network;
- determination, from the validation registration message received, of a predefined period (EXPIRES) within which the interconnection gateway (GTW) has to renew its registration with the IMS network;
- determination of whether a request for registration of the interconnection gateway (GTW), with the IMS network, is received from the S-CSCF server within the predetermined period and detection of a connection loss between the gateway and said at least one application service if no said request for registration is received from the S-CSCF server within the predefined period (EXPIRES) or whether a message for suspending registration of the interconnection gateway, with the IMS network, is received from said S-CSCF server within the predefined period, said connection loss signifying that the interconnection gateway is unable to access the application service; and
- triggering of at least one first predetermined action in response to the detection of said connection loss.

8. Method of detection according to Claim 7, in which said at least one first predetermined action is chosen among at least one of the following actions: notification to a user of the detected connection loss, sending an order to reset said gateway (GTW), sending a test message to said gateway, and sending an order to update a program of said gateway.

9. Method of detection according to Claim 7 or 8, in which said at least one first action comprises sending a test message to the gateway, the method further comprising:
- the determination, from a response from the gateway to said test message, of the cause of said connection loss, the cause being at least one of the following causes: suspension of the electrical power supply of said gateway, software problem of said gateway and interruption of the IMS network; and
- the triggering of at least one second predetermined action following the determination of the cause of said connection loss.

10. Method of detection according to Claim 9, in which said at least one second predetermined action comprises the notification to a user of the cause of said detected connection loss.

11. Method of detection according to one of Claims 7 to 10, the method further comprising:
- the detection of the restoration of the connection between the gateway (GTW) and said at least one application service following the reception of a re-registration request from said gateway; and
- the triggering of at least one third predetermined action in response to the detection of the restoration of said connection.

12. Method of detection according to Claim 11, in which said at least one third predetermined action comprises the notification to a user of the restoration of the connection between the gateway and said at least one application service.

13. Computer program (10) comprising instructions for executing the steps of the method of detection according to any one of Claims 7 to 12 when said program is executed by a computer.

14. Computer readable recording medium (6) on which a computer program (10) is recorded comprising instructions for executing the steps of the method of detection according to any one of Claims 7 to 12.

15. System comprising an interconnection gateway (GTW) and an application server (AS_DETECT) according to one of Claims 1 to 6,
said application server being capable of detecting a connection loss between said gateway and at least one application service.
